# FASCICULE DE BREVET EUROPEEN

(11) **EP 0 427 932 B1**
(45) Date de publication et mention de la délivrance du brevet: **28.02.1996**
(21) Numéro de dépôt: 90116871.6
(22) Date de dépôt: 03.09.1990
(51) Int. Cl.: G01B 3/10

(54) **Mesure linéaire roulante avec multiplicateur**
Rollende lineare Messung mit Multiplikator
Rolling linear measure with multiplier

(30) Priorité: 14.09.1989 FR 8912020
(43) Date de publication de la demande: 22.05.1991
(73) Titulaire: SICFO STANLEY - Société Industrielle et Commerciale Française des Outils Stanley, F-25009 Besancon Cédex (FR)
(72) Inventeur: Prouteau, Bernard, 25320 Montferrand le Château (FR)
(74) Mandataire: Patentanwälte Beetz - Timpe - Siegfried Schmitt-Fumian - Mayr

(56) Documents cités:
- FR-A- 1 331 531
- FR-A- 2 394 780
- FR-A- 2 509 039
- FR-A- 2 541 446
- US-A- 2 268 178

## Description

L'invention se rapporte à une mesure linéaire roulante à multiplicateur décrite dans le préambule de la revendication 1. Une telle mesure est connue par la demande de brevet FR-A-2 541 446. Le multiplicateur divulgué par ce document comprend un grand pignon à denture intérieure fixé à l'axe de la manette de réembobinage qui engrène avec un petit pignon à denture extérieure fixé à l'axe de la bobine. Un multiplicateur doit être très robuste, car une mesure du type décamètre est un outil professionnel qui est utilisé fréquemment et pas toujours soigneusement. Comme un multiplicateur comporte de manière générale de nombreuses pièces mobiles, il faut prévoir qu'après un certain temps d'utilisation des pignons ou une courroie aient besoin d'être remplacés. Cependant il serait désavantageux que la mesure ne puisse plus servir en cas de réparation. Il serait donc souhaitable d'avoir un multiplicateur amovible et échangeable, si celui-ci fonctionnait mal. De plus, il serait intéressant que ce multiplicateur puisse s'adapter aux autres décamètres à manivelle simple vendus antérieurement.

La présente invention a donc pour objet de proposer une mesure linéaire roulante du type décamètre avec un multiplicateur qui puisse être installé facilement sur la mesure et puisse s'adapter à plusieurs modèles déjà existants.

Dans ce but, le modèle inventé présente une manivelle et un multiplicateur qui entraînent le tambour, tout en étant montés à l'extérieur de la mesure sur le cadre.

Ainsi l'arbre de sortie du multiplicateur se positionne à la place de l'arbre de la manivelle standard originale. Cela permet d'adapter le multiplicateur sur des modèles déjà existants.

Dans un mode de réalisation de l'invention, le multiplicateur est prévu pour se fixer sur le cadre de la mesure.

Ces moyens de fixation du boîtier par serrage comprennent au moins une bande en acier à ressort munie de pattes de fixation à chaque extrémité, enveloppant les bords d'au moins un des bras du cadre de la mesure. Les pattes sont serrables sur les bords d'un bras par un mécanisme de vis tirant sur le milieu de la bande en acier à ressort en s'appuyant sur le fond du socle du boîtier reposant sur ledit bras.

Suivant un autre mode de réalisation de la mesure, le multiplicateur suivant l'invention comprend une courroie dentelée. Celle-ci relie un pignon d'entraînement et un pignon mené dans un compartiment du boîtier multiplicateur, étanche à la poussière d'ambiance. Dans un autre compartiment du boîtier, le système de serrage est prévu.

Une forme d'exécution d'une mesure suivant l'invention sera maintenant expliquée à titre d'exemple en détail en se référant aux 4 dessins annexés:
la figure 1 est une vue de dessus de la mesure suivant l'invention;
la figure 2 montre le multiplicateur accroché sur un bras de la mesure, sans couvercle;
la figure 3 montre la manivelle et le couvercle du multiplicateur;
et la figure 4 le mécanisme de blocage du pignon mené en détail.

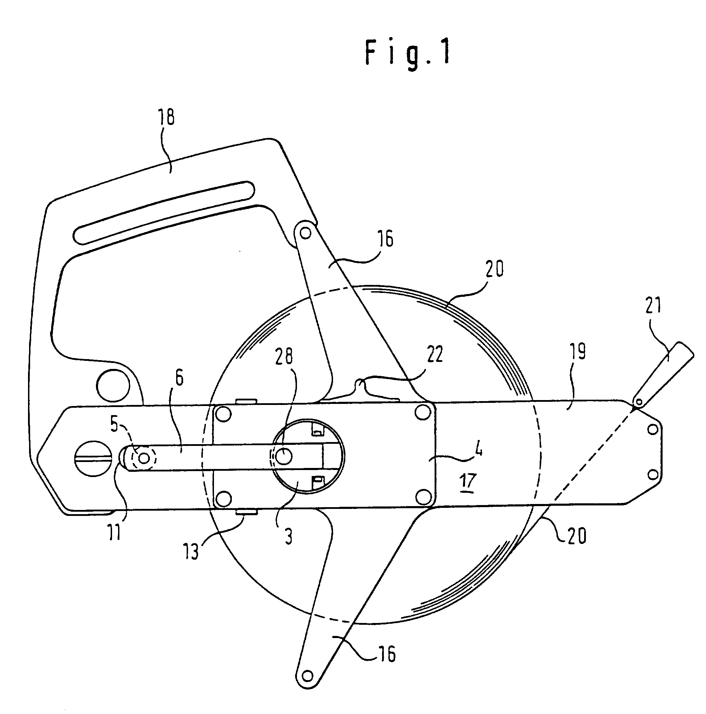

En se référant à la figure 1 sur laquelle est représenté une mesure avec un cadre cruciforme, on peut voir le ruban embobiné sur un tambour intercalé entre deux parois 19 parallèles formant le cadre. On note aussi qu'un anneau de tirage 21 est prévu au bout du ruban. Le cadre a quatre bras 16 dont deux sont reliés par une poignée 18.

Le multiplicateur est monté sur une paroi 19 de telle manière que son arbre de sortie soit centré sur le trou central du tambour.

Un bouton de blocage est prévu sur une face latérale du boîtier multiplicateur. A l'aide de ce bouton, on peut bloquer le pignon pour éviter que le ruban se débobine et permettre la mise sous tension du ruban lors des opérations de mesurage.

D'autre part, dans un des bras du cadre, au niveau du radius du maneton de manivelle, un trou de fixation est conçu pour que le maneton puisse être introduit en position de non-utilisation. Dans ce but, la manivelle 6 est montée en pivot sur un support de manivelle 3.

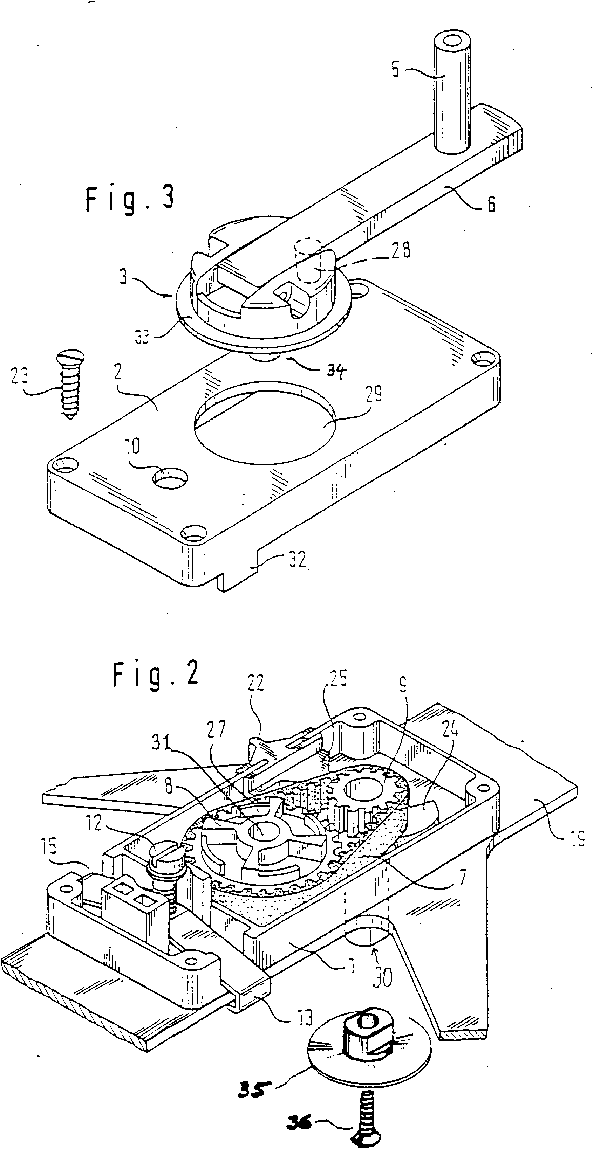

La figure 2 montre le multiplicateur sans couvercle, en perspective. Le socle du boîtier multiplicateur est divisé en deux compartiments, le premier loge le pignon d'entraînement et le pignon mené, et l'autre est prévu pour recevoir le système de serrage sur un des bras du cadre. Ce compartiment comprend une bande en acier à ressort 15 dont les extrémités sont pourvues de pattes de fixation 13. Celles-ci sont constituées d'un simple rebord aux extrémités de la bande. Cette bande traverse au milieu du compartiment un trou carré placé dans un logement qui lui permet un mouvement vertical. Une vis 12 traverse la bande 15 par un trou prévu et vient plus ou moins dans l'écrou suivant le réglage de la vis. Par conséquent, les pattes de fixation 13 sont serrées vers les bords latéraux d'un des bras du cadre ou bien relâchées. Cette vis 12 est atteignable à travers le couvercle 2 du boîtier par un trou 10 prévu dans le même axe que la vis 12.

Le deuxième compartiment du socle du boîtier comprend le pignon d'entraînement 8 qui transmet la force motrice au pignon mené 9 par l'intermédiaire d'une courroie 7. L'arbre de sortie de ce dernier passe par une ouverture prévue dans le fond de socle et peut être placé dans le trou central du tambour de la mesure.

La transmission de l'effort par une courroie évite le contact direct des deux pignons qui aurait comme effet un inversement du sens de rotation des pignons et donnerait l'impression d'un mouvement non-naturel.

Coaxialement avec le pignon mené et formant une seule pièce avec celui-ci, est prévue une roue d'encliquetage 24 qui coopère avec un cliquet de blocage, par un bouton 22 commandé prévu sur une surface latérale du boîtier du multiplicateur.

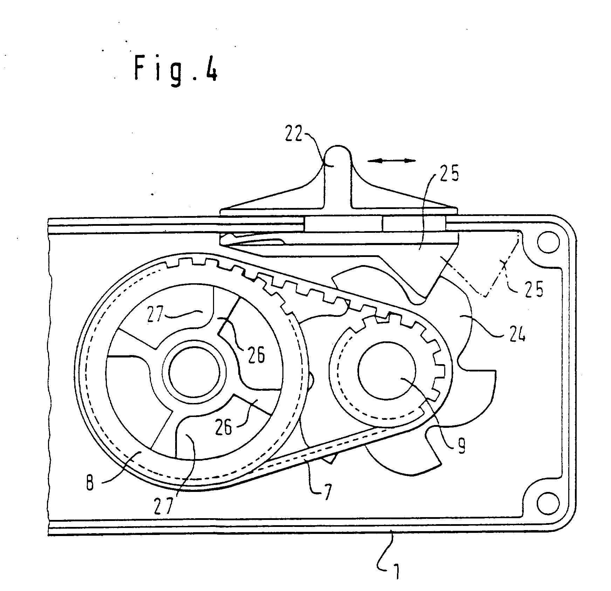

La figure 4 montre le montage de ces éléments plus en détail.

Sur le pignon d'entraînement vient le support de la manivelle. Quatre logements 27 sont prévus sur le pignon d'entraînement pour recevoir le téton 28 de la manivelle 6. Si la manivelle 6 est rabattue dans sa position de repos avec son maneton 5 dans le trou 11, le pignon d'entraînement est désolidarisé de la manivelle et tourne dans le vide lors du déroulement du ruban.

La figure 3 présente en perspective le couvercle 2 du boîtier multiplicateur, la manivelle 6 et son support 3 qui vient se loger dans un trou 29 placé coaxialement avec le pignon d'entraînement. Le support de la manivelle 6 a un épaulement 33 avec un diamètre supérieur à celui de trou 29, ce qui empêche la poussière d'entrer dans le boîtier. Le bon alignement entre le support 3 de la manivelle 6 et le pignon d'entraînement 8 est en outre assuré par un arbre de sortie 34 du support 3 de la manivelle 6 qui vient se loger dans un trou central 31 prévu dans le pignon d'entraînement 8.

Le couvercle 2 du boîtier se fixe à l'aide des vis d'assemblage 23 sur le socle 1. Une vis est prévue à chaque coin du boîtier, de préférence de forme rectangulaire.

Sur la figure 3, on note aussi des languettes 32 qui ferment partiellement les ouvertures prévues pour les pattes de fixation 13.

La figure 4 montre une vue plus précise de l'arrangement du pignon d'entraînement et du pignon mené et le système de blocage constitué par la roue d'encliquetage 24 et le cliquet de blocage 25.

Le multiplicateur suivant l'invention dont un mode de réalisation est décrit ci-dessus peut être réalisé entièrement en matière plastique, sauf pour la manivelle, son support, la bande de serrage et les vis.

Le remplacement des pièces d'usure telles que la courroie 7 ou les pignons 8 et 9 peut s'effectuer rapidement sans avoir à retirer le multiplicateur de la mesure. Il suffit simplement de retirer le couvercle 2 après avoir dévissé les 4 vis 23 pour avoir accès aux pièces à remplacer. Si des dommages plus importants devaient entraîner le remplacement du multiplicateur, il suffirait de déserrer les pattes de fixation au moyen de la vis de serrage 12 et de dévisser la vis centrale 36. Un autre multiplicateur pourrait alors être monté rapidement sans immobilisation de longue durée de la mesure. Un tel multiplicateur peut être monté sur un décamètre d'origine prévu avec une simple manivelle en mettant à la place de l'arbre de ladite manivelle, l'arbre de sortie du multiplicateur. Sa fixation sur le cadre de la mesure s'effectuant au moyen du système de serrage prévu à cet effet précédemment décrit. Une telle mesure pouvant être équipée par un tel multiplicateur est, par exemple, celle décrite dans demande de brevet FR-A-2 541 446 de la demanderesse.

Bien entendu, la description d'un mode de réalisation d'une mesure suivant l'invention était donnée à titre d'exemple et n'est nullement limitatif.
1) Socle
2) Couvercle
3) Support de manivelle
4) Multiplicateur
5) Maneton de la manivelle
6) Manivelle
7) Courroie
8) Pignon d'entraînement
9) Pignon mené
10) Trou d'accès à la vis de serrage
11) Trou de logement du maneton de manivelle
12) Vis de serrage
13) Patte de fixation
14) Ecrou carré
15) Bande en acier à ressorts
16) Bras
17) Cadre cruciforme
18) Poignée
19) Parois parallèles
20) Ruban
21) Anneau de tirage
22) Bouton de blocage
23) Vis d'assemblage couvercle
24) Roue d'encliquetage
25) Cliquet de blocage
26) Encliquetage sur pignon d'entraînement
27) Logement
28) Téton d'entraînement
29) Trou
30) Arbre de sortie
31) Trou central du pignon d'entraînement
32) Languettes
33) Epaulement
34) Axe de rotation du support de manivelle
35) Rondelle d'appui
36) Vis d'assemblage multiplicateur sur cadre

## Revendications

1. Mesure linéaire roulante du type décamètre comprenant:
- un cadre (17),
- un tambour, monté dans le cadre (17), pouvant effectuer un mouvement de rotation,
- un ruban (20) autour du tambour, et
- une manivelle (6) entraînant le tambour pour embobiner le ruban (20),
- la manivelle (6) entraînant le tambour par l'intermédiaire d'un multiplicateur (4) monté dans un boîtier (1,2) à l'extérieur du cadre (17)
- un pignon mené (9) qui se place dans l'axe du tambour à l'intérieur du cadre (17),
caractérisée en ce que
le multiplicateur (4) est monté de manière amovible, pouvant se fixer sur une partie (19) du cadre (17) par des moyens de serrage, la fixation latérale du boîtier (1, 2) étant assurée par l'arbre de sortie (30) du pignon mené (9).

2. Mesure selon la revendication 1, caractérisée en ce que le boîtier (1, 2) a une forme rectangulaire, comprend un socle (1) et un couvercle (2) montés par emboîtement et fixés l'un sur l'autre par des vis (23) prévues dans chaque angle du boîtier (1, 2).

3. Mesure selon une quelconque des revendications 1 à 2, caractérisée en ce que les moyens de fixation du boîtier par serrage comprennent au moins une bande en acier à ressort (15) avec des pattes de fixation (13) à chaque extrémité enveloppant les bords d'au moins un des bras (19) du cadre (17), les pattes (13) étant serrables par un mécanisme de vis (12) tirant sur le milieu de la bande (15) en acier à ressort en s'appuyant sur le fond du boîtier (2) reposant sur le bras (19).

4. Mesure selon une quelconque des revendications précédentes, caractérisée en ce que le multiplicateur (4) comprend une courroie dentelée (7) reliant le pignon d'entraînement (8) et le pignon mené (9), tous les deux dentelés.

5. Mesure selon une des revendications 1 à 4, caractérisée en ce que le pignon mené (9) comprend sur le même axe une roue d'encliquetage (24) pouvant être stoppée par un bouton de blocage (25) monté de manière translatable sur une paroi du boîtier (1, 2), ce qui permet d'arrêter le pignon mené (9) dans une position choisie.

6. Mesure selon une quelconque des revendications précédentes, caractérisée en ce que la manivelle (6) peut pivoter sur un support (3) reposant lui-même sur le pignon d'entraînement (8), les surfaces de contact respectives ayant des cliquets qui fontionnent que dans le sens d'embobinage du ruban (20).

7. Mesure selon une quelconque des revendications 1 à 6, caractérisée en ce que les pignons (8, 9) du multiplicateur (4) sont arrangés dans un compartiment du boîtier, étanche à la poussière d'ambiance.

## Patentansprüche

1. Längenmeßgerät mit Aufwicklung des Dekametertyps mit:
- einem Rahmen (17),
- einer Trommel, die im Rahmen (17) angebracht ist und eine Drehbewegung ausführen kann,
- einem um die Trommel verlaufenden Band (20),
- einer Kurbel (6), die die Trommel antreibt, um das Band (20) aufzuwickeln,
- wobei die Kurbel (6) die Trommel über ein Übersetzungsgetriebe (4) antreibt, das in einem Gehäuse (1, 2) außerhalb des Rahmens (17) angebracht ist, und
- einem angetriebenen Ritzel (9), das sich auf der Achse der Trommel innerhalb des Rahmens (17) befindet,
dadurch gekennzeichnet, daß
das Übersetzungsgetriebe (4) abnehmbar angebracht ist und an einem Teil (19) des Rahmens durch Klemmeinrichtungen befestigt werden kann, wobei die seitliche Befestigung des Gehäuses (1, 2) durch die Abtriebswelle (30) des angetriebenen Ritzels (9) sichergestellt ist.

2. Meßgerät nach Anspruch 1, dadurch gekennzeichnet, daß das Gehäuse (1, 2) eine rechtwinklige Form besitzt und einen Sockel (1) sowie einen Deckel (2) aufweist, die durch Ineinanderstecken angebracht und aneinander durch Schrauben (23) befestigt sind, die in jeder Ecke des Gehäuses (1, 2) vorgesehen sind.

3. Meßgerät nach irgendeinem der Ansprüche 1 bis 2, dadurch gekennzeichnet, daß die Klemmeinrichtungen für die Befestigung des Gehäuses wenigstens einen Federstahlstreifen (15) mit Befestigungshaken (13) an jedem Ende, die die Ränder wenigstens eines der Arme (19) des Rahmens (17) umgeben, enthalten, wobei die Haken (13) durch einen Schraubenmechanismus (12) festklemmbar sind, der an der Mitte des Federstahlstreifens (15) zieht, indem er sich auf dem auf dem Arm (19) aufliegenden Boden des Gehäuses (2) abstützt.

4. Meßgerät nach irgendeinem der vorangehenden Ansprüche, dadurch gekennzeichnet, daß das Übersetzungsgetriebe (4) einen Zahnriemen (7) enthält, der das Antriebsritzel (8) und das angetriebene Ritzel (9), die beide gezahnt sind, verbindet.

5. Meßgerät nach einem der Ansprüche 1 bis 4, dadurch gekennzeichnet, daß das angetriebene Ritzel (9) auf derselben Achse ein Sperrad (24) aufweist, das durch einen Sperransatz (25), der an einer Wand des Gehäuses (1, 2) verschiebbar angebracht ist, angehalten werden kann, wodurch das angetriebene Ritzel (9) in einer gewählten Position angehalten werden kann.

6. Meßgerät nach irgendeinem der vorangehenden Ansprüche, dadurch gekennzeichnet, daß die Kurbel (6) an einem Träger (3) schwenkbar ist, der seinerseits auf dem Antriebsritzel (8) aufliegt, wobei die entsprechenden Kontaktoberflächen Sperrklinken besitzen, die in Aufwicklungsrichtung des Bandes (20) wirken.

7. Meßgerät nach irgendeinem der Ansprüche 1 bis 6, dadurch gekennzeichnet, daß die Ritzel (8, 9) des Übersetzungsgetriebes (4) in einem Fach des Gehäuses angeordnet sind, das gegenüber dem Umgebungsstaub dicht ist.

## Claims

1. A measuring drawtape of the ten-metre type, comprising:
- a frame (17),
- a drum mounted in the frame (17) and adapted to rotate,
- a tape (20) around the drum, and
- a crank (6) driving the drum to wind the tape (20),
- the crank (6) driving the drum via a step-up gear (4) mounted in a casing (1, 2) outside the frame (17),
- a driven gearwheel (9) occupying a position on the axis of the drum inside the frame (17),
characterised in that
the step-up gear (4) is mounted detachably, being adapted for fixing on a part (19) of the frame (17) by clamping means, lateral fixing of the casing (1, 2) being provided by the output shaft (30) of the driven gearwheel (9).

2. A measuring drawtape according to claim 1, characterised in that the casing (1, 2) is of rectangular shape, comprises a base (1) and a cover (2) fitted one in the other and fixed on one another by screws (23) provided at each corner of the casing (1, 2).

3. A measuring drawtape according to claim 1 or 2, characterised in that the means for fixing the casing by clamping comprises at least one spring steel strip (15) with fixing lugs (13) at each end enveloping the edges of at least one of the arms (19) of the frame (17), the lugs (13) being lockable by a screw mechanism (12) pulling on the middle of the spring steel strip (15) and bearing on the base of the casing (2) resting on the arm (19).

4. A measuring drawtape according to any one of the preceding claims, characterised in that the step-up gear (4) comprises a toothed belt (7) connecting the driving gearwheel (8) and the driven gearwheel (9), both of which are toothed.

5. A measuring drawtape according to any one of claims 1 to 4, characterised in that the driven gearwheel (9) comprises, on the same shaft, a ratchet wheel (24) stoppable by a locking button (25) mounted movably on a wall of the casing (1, 2) so that the driven gearwheel (9) can be stopped in a selected position.

6. A measuring drawtape according to any one of the preceding claims, characterised in that the crank (6) can pivot on a support (3) which itself rests on the driving gearwheel (8), the respective contact surfaces having catches which operate only in the direction of winding of the tape (20).

7. A measuring drawtape according to any one of claims 1 to 6, characterised in that gearwheels (8, 9) of the step-up gear (4) are arranged in a compartment of the casing which is sealed off from ambient dust.
